# EUROPEAN PATENT APPLICATION

(11) **EP 4 772 369 A1**
(43) Date of publication of application: **08.07.2026**
(21) Application number: 23950785.8
(22) Date of filing: 31.08.2023
(51) Int. Cl.: B60K 1/04, H01M 50/249

(54) **VEHICLE BATTERY SUPPORT STRUCTURE**

(71) Applicant: Nissan Motor Co., Ltd., Yokohama-shi, Kanagawa 221-0023 (JP)
(72) Inventor: KOIKE, Hideki, Atsugi-shi, Kanagawa 243-0123 (JP); FUKAMI, Tooru, Atsugi-shi, Kanagawa 243-0123 (JP); IKEDA, Akihiro, Atsugi-shi, Kanagawa 243-0123 (JP); KANEDA, Tomoyuki, Atsugi-shi, Kanagawa 243-0123 (JP); KATSUYAMA, Ryousuke, Atsugi-shi, Kanagawa 243-0123 (JP)
(74) Representative: Grünecker Patent- und Rechtsanwälte PartG mbB
(86) International application number: PCT/JP2023/031779
(87) International publication number: WO 2025/046839

(57) **Abstract**

A vehicle battery support structure (20) includes: a frame (21) that defines a battery compartment (A1) in which a plurality of battery modules (30) are stored; a cross member (22) that divides the battery compartment (A1) into a plurality of module storage regions (A2) in which each of the plurality of battery modules (30) is stored; a plurality of elongated plate-shaped members (23) provided under the battery compartment (A1); a vehicle body fastening member (24) provided between a vehicle body (10) of the vehicle (1) and the frame (21). The frame (21) is fastened to the vehicle body (10) of the vehicle (1) via the vehicle body fastening member (24). The plurality of elongated plate-shaped members (23) are fastened to the frame (21) and arranged so as not to be positioned under the cross member (22).

## Description

### Technical Field

The present invention relates to a vehicle battery support structure.

### Background Art

In a support structure for a battery pack described in Patent Document 1, an outer frame, which is the plate-shaped member provided at the bottom of the battery pack, is directly fastened to a vehicle body.

### Prior Art Document

### Patent Document

Patent Document 1: JP-A-2019-166905

### Summary of Invention

### Problems to be Solved by Invention

However, in the support structure for the battery pack described in Patent Document 1, the vibration of the battery pack is readily transmitted to the vehicle body via the plate-shaped member.

The problem to be solved by the present invention is to provide a vehicle battery support structure that suppresses a vibration transmitted from a battery module to a vehicle body.

### Means for Solving Problems

The present invention solves the above-described problems by including a frame defining a battery compartment fastened to a vehicle body of a vehicle via a vehicle body fastening member and a reinforcement plate provided under the battery compartment fastened to the frame and arranged so as not to be positioned under a cross member that divides the battery compartment into a plurality of module storage regions.

### Effects of Invention

The present invention can suppress the vibration transmitted from the battery module to the vehicle body.

### Brief Description of Drawings

FIG. 1 is a perspective view illustrating a state in which a vehicle battery support structure according to the present embodiment is fastened to a vehicle body of a vehicle.
FIG. 2 is a plan view of the vehicle battery support structure illustrated in FIG. 1.
FIG. 3 is a cross-sectional view of the vehicle battery support structure illustrated in FIG. 2, taken along the III-III line.
FIG. 4 is a cross-sectional view of a reinforcement plate (an elongated plate-shaped member) of the vehicle battery support structure illustrated in FIG. 2, taken along the IV-IV line.

### Mode(s) for Carrying out the Invention

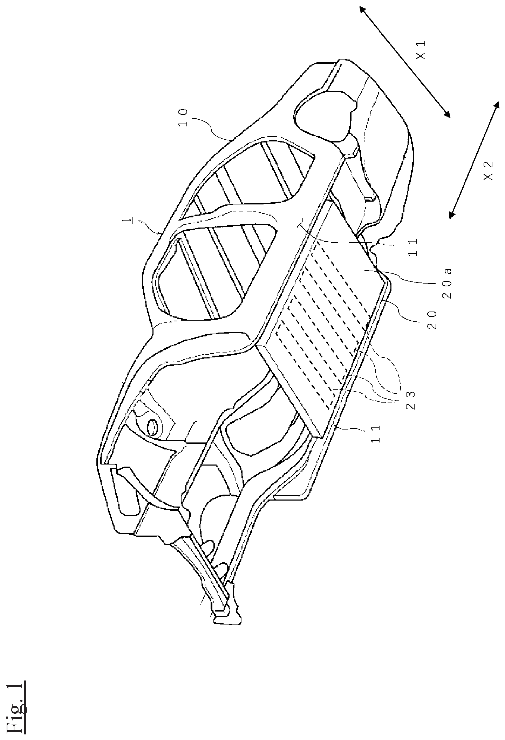

As illustrated in FIG. 1, a vehicle battery support structure 20 is provided on a bottom side of a vehicle body 10 of a vehicle 1. The vehicle battery support structure 20 is arranged in a space between a pair of side sills 11 on the vehicle body 10. In FIG. 1, a bottom plate 20a is fastened to a bottom side of the vehicle battery support structure 20. Inside the vehicle battery support structure 20, four elongated plate-shaped members 23 are provided so as to extend in a left/right direction X1 of the vehicle body 10 and be aligned in a front and rear direction X2 of the vehicle body 10. The vehicle battery support structure 20 supports a plurality of battery modules 30.

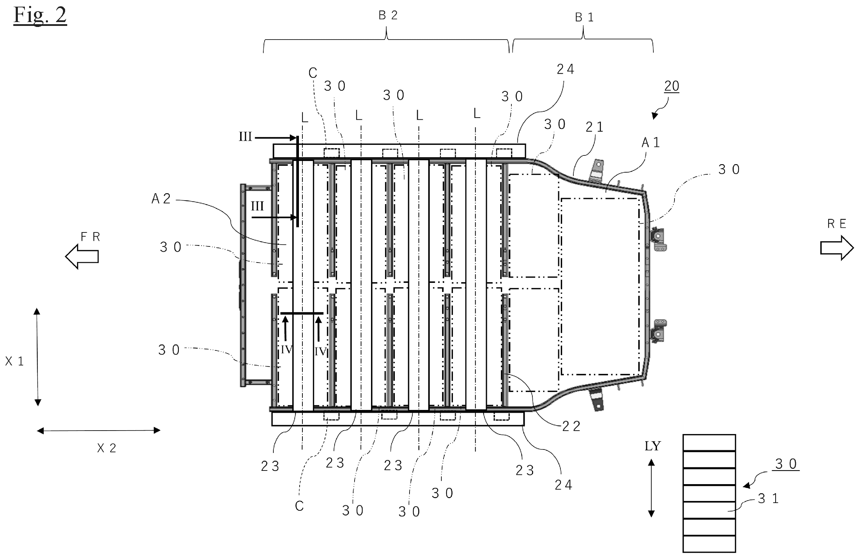

FIG. 2 is a plan view of an internal structure of the vehicle battery support structure 20 in a state in which the bottom plate 20a has been removed. Note that, in FIG. 2, a left side of the drawing is a front (FR) of the vehicle 1, and a right side is a rear (RE).

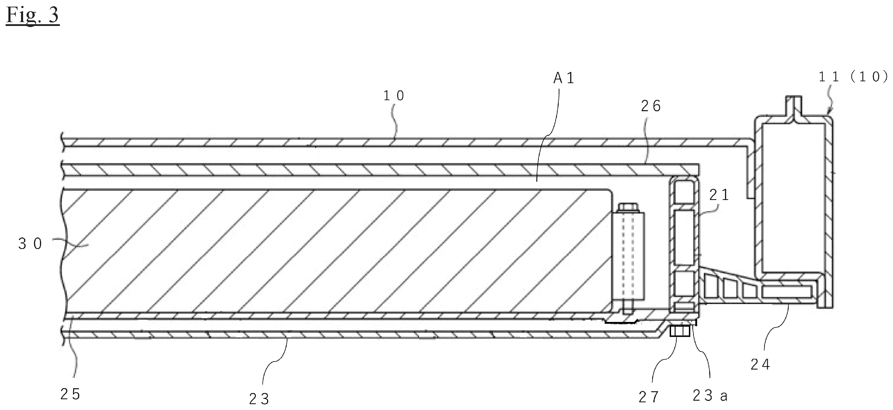

As illustrated in FIG. 2, the vehicle battery support structure 20 includes a frame 21 that defines a battery compartment A1 in which a plurality of battery modules 30 are housed. The battery compartment A1 inside the frame 21 has a first region B1 having a substantially trapezoidal shape, in which a width gradually narrows toward the rear side RE, and a second region B2 on the front side FR of the first region B1 having a substantially rectangular shape. The frame 21 may be a component integrally formed by an extrusion molding, or may be a component formed by welded joint of the plurality of members. Further, as illustrated in FIG. 3, a top plate 26 is fastened to an upper end of the frame 21. Additionally, a cooling plate 25 is fastened to a lower end of the frame 21. Namely, the battery compartment A1 is a space surrounded by the frame 21, the top plate 26, and the cooling plate 25.

As illustrated in FIG. 2, the vehicle battery support structure 20 has ten cross members 22. Each of the cross members 22 is welded to inside of the frame 21 by welded joints. Five cross members 22 are fastened to a right-side portion of the frame 21 at predetermined intervals and extend in the left/right direction X1. Similarly, the five cross members 22 are fastened to the left-side portion of the frame 21 at the predetermined intervals and extend in the left/right direction X1. Spaces between the cross members 22 aligned in the front and rear direction X2 constitute the module storage regions A2. In the example illustrated in FIG. 2, the eight module storage regions A2 are formed in the second region B2 of the battery compartment A1. In other words, the cross members 22 divide the battery compartment A1 into the plurality of module storage regions A2.

As illustrated in FIG. 2, three battery modules 30 are housed in the first region B1 of the battery compartment A1. In the second region B2 of the battery compartment A1, each of the eight battery modules 30 is stored in the module storage region A2. That is, the vehicle battery support structure 20 includes eleven battery modules 30. Additionally, each of the battery modules 30 includes a plurality of cells 31. In the example illustrated in FIG. 2, a stacking direction LY of the cells 31 is the left/right direction X1.

Four elongated plate-shaped members 23, which constitute a reinforcement plate, are provided under the frame 21. The elongated plate-shaped members 23 are provided under the battery compartment A1. Each of the elongated plate-shaped members 23 is arranged to extend across the battery compartment A1 in the left/right direction X1. That is, each of the elongated plate-shaped members 23 extends in the stacking direction LY of the cells 31 of the battery module 30. Each of the elongated plate-shaped members 23 is arranged so as not to be positioned under the cross member 22. Each elongated plate-shaped member 23 is arranged such that a central axis L of the elongated plate-shaped member 23 is arranged under a center position of the module storage region A2.

The number of the elongated plate-shaped members 23 constituting the reinforcement plate is not limited to that in the present embodiment. The reinforcement plate is not limited to the plurality of elongated plate-shaped members 23 but may be, for example, the one rectangular plate-shaped member that covers the bottom of the battery compartment A1.

As illustrated in FIG. 3, each end 23a of the elongated plate-shaped member 23 is fastened to the frame 21 by a connecting member 27, such as a bolt. The position of the connecting member 27, that is, the fastening position between the frame 21 and the elongated plate-shaped member 23, is arranged on the central axis L of the elongated plate-shaped member 23.

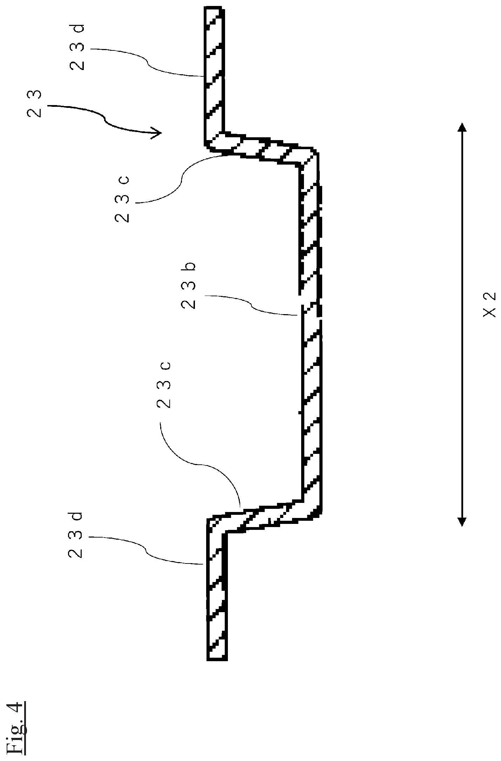

Further, as illustrated in the cross-sectional view of FIG. 4, the elongated plate-shaped member 23 includes a bottom surface portion 23b, a pair of inclined portions 23c, and a pair of upper surface portions 23d. Specifically, the bottom surface portion 23b is a flat plate-like portion. At the respective two ends in the front and rear direction X2 of the bottom surface portion 23b, the pair of inclined portions 23c are connected. The pair of inclined portions 23c are sloped such that the distance between them gradually widens in an upward direction. The pair of upper surface portions 23d, which are the flat plate-shaped portions, are connected to the upper end of each of the pair of inclined portions 23c. The bottom surface portion 23b of the elongated plate-shaped member 23 contacts the bottom plate 20a (see FIG. 1). The upper surface portion 23d of the elongated plate-shaped member 23 is in contact with the cooling plate 25 (see FIG. 3). And each of the elongated plate-shaped members 23 has the elasticity in a vertical direction by virtue of having the cross-sectional shape as described above.

As illustrated in FIG. 3, the cooling plate 25 is provided in a space between the frame 21 and the elongated plate-shaped member 23 to cool the battery module 30. A material of the elongated plate-shaped member 23 is different from a material of the cooling plate 25. For example, the material of the elongated plate-shaped member 23 is a 6000 series aluminum, and the material of the cooling plate 25 is a 3000 series aluminum. Thickness of the elongated plate-shaped member 23 and the thickness of the cooling plate 25 differ from one another. For example, the thickness of the elongated plate-shaped member 23 is 1 to 2 mm, and the thickness of the cooling plate 25 is 3 to 4 mm. More preferably, the thickness of the elongated plate-shaped member 23 is 2 mm and the thickness of the cooling plate 25 is 3 mm.

A vehicle body fastening member 24 is provided in between the side sill 11 of the vehicle body 10 and the frame 21. The frame 21 is fastened to the side sill 11 via the vehicle body fastening member 24. As illustrated in FIG. 2, the elongated plate-shaped members 23 are arranged such that the central axes L of the elongated plate-shaped members 23 are not positioned under the fastening position C between the frame 21 and the vehicle body fastening member 24. That is, in the front and rear direction X2, the fastening positions C between the frame 21 and the vehicle body fastening member 24 and the central axes L of the elongated plate-shaped members 23 are alternately arranged. The frame 21 is fastened to the vehicle body fastening member 24 by bolts or the like.

Based on the foregoing, in the vehicle battery support structure 100 according to this embodiment, the frame 21 is fastened to the vehicle body 10 of the vehicle 1 via the vehicle body fastening member 24. Additionally, the reinforcement plate (the elongated plate-shaped member 23) provided under the battery compartment A1 is fastened to the frame 21 and is arranged so as not to be positioned under the cross member 22. Accordingly, the vehicle battery support structure 100 can suppress the vibration transmitted from the battery module 30 to the vehicle body 10. In other words, when the frame 21 is fastened to the vehicle body 10 via the vehicle body fastening member 24, the vibration generated in the battery module 30 is less likely to be transmitted to the vehicle body 10 than when the frame 21 is fastened directly to the vehicle body 10. Since the frame 21, which is the framework of the vehicle battery support structure 100, has high rigidity, the reinforcement plate (the elongated plate-shaped member 23) is fastened to the frame 21, which is the high-rigidity portion, whereby the vibration of the battery module 30 is less likely to be transmitted to the vehicle body 10. If the reinforcement plate (the elongated plate-shaped member 23) were arranged under the cross member 22, a position of the reinforcement plate would shift from a position corresponding to the battery module 30, thus reducing the effectiveness of the reinforcement plate in suppressing the vibration of the battery module 30. Therefore, the reinforcement plates (the elongated plate-shaped members 23) are arranged so as not to be positioned under the cross members 22, thereby enhancing the vibration suppression effect of the battery module 30. Accordingly, the vehicle battery support structure 100 has a structure in which the vibration of the battery module 30 is less likely to be transmitted to the vehicle body 10.

In the vehicle battery support structure 100, the reinforcement plate is constituted by the plurality of elongated plate-shaped members 23, and both ends of each of the plurality of the elongated plate-shaped members 23 are fastened to the frame 21. This makes the vibration of the battery module 30 less likely to be transmitted to the vehicle body 10, as both ends of each of the elongated plate-shaped members 23 are fastened to the frame 21, which is a high-rigidity portion. Further, the reinforcement plate is constituted of the plurality of the elongated plate-shaped members 23, thereby providing the effect of reducing a weight of the vehicle battery support structure 100.

In the vehicle battery support structure 100, the central axis L of the elongated plate-shaped member 23 is arranged under the center position of the module storage region A2. This allows the elongated plate-shaped members 23 to efficiently suppress the vibration of the battery module 30.

Additionally, in the vehicle battery support structure 100, the battery module 30 includes the plurality of cells 31 stacked in the predetermined stacking direction LY, and the elongated plate-shaped members 23 extend in the stacking direction LY. Here, the vibration of the battery module 30 is caused by a misalignment between the cells 31. Therefore, the elongated plate-shaped members 23 are arranged to extend along the stacking direction LY, thereby suppressing the misalignment between the cells 31 and the vibration of the battery module 30.

In the vehicle battery support structure 100, the elongated plate-shaped members 23 are arranged such that the central axes L of the elongated plate-shaped members 23 are not positioned under the fastening positions C between the frame 21 and the vehicle body fastening member 24. This suppresses the transmission of the vibration of the battery modules 30, transmitted to the elongated plate-shaped member 23, to the vehicle body 10 via the fastening positions C between the frame 21 and the vehicle body fastening member 24.

In the vehicle battery support structure 100, the cooling plate 25 is provided between the frame 21 and the reinforcement plates (the elongated plate-shaped members 23) to cool the battery modules 30. Accordingly, the vibrations transmitted from the reinforcement plates to the frame 21 are further suppressed.

Additionally, in the vehicle battery support structure 100, the material of the reinforcement plate (the elongated plate-shaped member 23) and the material of the cooling plate 25 are different from one another. This shifts the resonance frequencies of the reinforcement plate and the cooling plate 25 and suppresses the resonance occurrence probability, thereby suppressing the amplitude of the vibration of the vehicle battery support structure 100.

In the vehicle battery support structure 100, the thickness of the reinforcement plate (the elongated plate-shaped member 23) and the thickness of the cooling plate 25 are different from each other. This shifts the resonance frequencies of the reinforcement plate and the cooling plate 25 and suppresses the resonance occurrence probability, thereby suppressing the amplitude of the vibration of the vehicle battery support structure 100.

In the vehicle battery support structure 100, the frame 21 is fastened to the side sills 11 of the vehicle body 10 via the vehicle body fastening members 24. Accordingly, the vehicle battery support structure 100 is fastened to the side sills 11, which are the high-rigidity portion of the vehicle body 10, whereby the vibration transmitted to the vehicle body 10 is suppressed.

In the vehicle battery support structure 100, the reinforcement plates (the elongated plate-shaped members 23) have elasticity. This makes the vibration of the battery module 30 less likely to be transmitted to the vehicle body 10.

### Description of Reference Numerals

- 1: Vehicle
- 10: Vehicle body
- 11: Side sill
- 20: Vehicle battery support structure
- 21: Frame
- 22: Cross member
- 23: Elongated plate-shaped member (reinforcement plate)
- 24: Vehicle body fastening member
- 25: Cooling plate
- 30: Battery module
- 31: Cell
- A1: Battery compartment
- A2: Module storage region

## Claims

1. A vehicle battery support structure for supporting a plurality of battery modules provided in a vehicle, comprising:
a frame that defines a battery compartment in which the plurality of battery modules are stored;
a cross member that divides the battery compartment into a plurality of module storage regions in which each of the plurality of battery modules is stored;
a reinforcement plate provided under the battery compartment; and
a vehicle body fastening member provided between a vehicle body of the vehicle and the frame, wherein
the frame is fastened to the vehicle body of the vehicle via the vehicle body fastening member, and
the reinforcement plate is fastened to the frame and arranged so as not to be positioned under the cross member.

2. The vehicle battery support structure according to claim 1, wherein
the reinforcement plate is a plurality of elongated plate-shaped members, and
both ends of each of the plurality of elongated plate-shaped members are fastened to the frame.

3. The vehicle battery support structure according to claim 2, wherein
the elongated plate-shaped member has a central axis arranged under a center position of the module storage region.

4. The vehicle battery support structure according to claim 2 or 3, wherein
the battery module has a plurality of cells stacked in a predetermined stacking direction, and
the elongated plate-shaped member extends in the stacking direction.

5. The vehicle battery support structure according to any one of claims 2 to 4, wherein
the elongated plate-shaped member is arranged such that a central axis of the elongated plate-shaped member is not positioned under a fastening position between the frame and the vehicle body fastening member.

6. The vehicle battery support structure according to any one of claims 1 to 5, wherein
a cooling plate is provided between the frame and the reinforcement plate to cool the battery module.

7. The vehicle battery support structure according to claim 6, wherein
a material of the reinforcement plate and a material of the cooling plate are different from one another.

8. The vehicle battery support structure according to claim 6 or 7, wherein
a thickness of the reinforcement plate and a thickness of the cooling plate are different from one another.

9. The vehicle battery support structure according to any one of claims 1 to 8, wherein
the frame is fastened to a side sill of the vehicle body via the vehicle body fastening member.

10. The vehicle battery support structure according to any one of claims 1 to 9, wherein
the reinforcement plate is elastic.
